# EUROPEAN PATENT APPLICATION

(11) **EP 3 101 615 A1**
(43) Date of publication of application: **07.12.2016**
(21) Application number: 15170088.7
(22) Date of filing: 01.06.2015
(51) Int. Cl.: G06Q 50/04, G06Q 10/06, G06Q 10/08

(54) **TOPOLOGY AND ONTOLOGY GENERATION SYSTEM**

(71) Applicant: Airbus Operations GmbH, 21129 Hamburg (DE)
(72) Inventor: Gonnsen, Johannes, 21129 Hamburg (DE)
(74) Representative: Kopf Westenberger Wachenhausen Patentanwälte PartG mbB

(57) **Abstract**

Aircraft assembly system, comprising a topology and ontology generation system, which uses description logic for generating a specific aircraft design and configuration. The aircraft design and configuration can be automatically changed by the system in order to reach a different design and configuration.

## Description

### Field of the invention

The present invention relates to aircraft configuration, design and assembly. In particular, the present invention relates to a topology and ontology generation system for designing and configuring an aircraft, an aircraft assembly system comprising a topology and ontology generation system, a method for designing and configuring an aircraft, a program element and a computer-readable medium.

### Background

Configuration, design and assembly of an aircraft is a complex task. Computer-based tools, which are operated by a tool operator, are used to generalize aircraft cabin layouts, thereby observing customer-specific configuration data. The customer-specific configuration data allows a customer (user) to select, inter alia, interior equipment components, which are to be installed in the aircraft, as well as positions, in which the components are to be installed.

Such an interior equipment component may be a galley, a toilet module, a crew rest compartment, a cabin light, or a stowage compartment. The customer may also select the number of economic class passenger seats, the number of business class passenger seats and/or the number of first class passenger seats to be installed in the aircraft.

DE 100 41 031 A1 describes a method for configuring an arrangement of components in an aircraft.

### Summary of the invention

It is an object of the present invention to provide for an improved designing, configuring and assembling of aircraft in order to reduce the overall costs.

This object is achieved by the subject-matter of the independent claims. Developments of the invention are stated in the dependent claims and the following description.

According to a first aspect of the present invention, a topology and ontology generation system for designing and configuring an aircraft is provided. The system comprises an input module, a database and a processing unit. The input module is adapted for inputting customer-specific design and/or configuration data relating to a component, which is to be installed in the aircraft.

The database comprises a set of rules for components available for installation in the aircraft. In particular, the database may comprise all rules for each and every component available for installation in the aircraft.

The processing unit is adapted for generating a design and a configuration of the aircraft in accordance with the set of rules and the customer-specific design and/or configuration data. It is further adapted for automatically varying the customer-specific design data and/or the customer-specific configuration data in order to improve, or at least change, the design and/or the configuration of the aircraft.

For example, the processing unit may be adapted for replacing components a user has selected for installation in the aircraft (by inputting respective customer-specific design and/or configuration data relating to that component) by other components, which differ from the selected components. Such a replacement may improve the overall design and/or configuration of the aircraft, or it may reduce the overall production/assembly costs and/or maintenance costs, or other properties of the aircraft, such as mechanical properties.

In other words, the system is capable of generating aircraft designs and configurations, which differ from what the user has initially selected, in particular if the changed design and/or configuration of the aircraft provides advantages over the prior design/configuration. Reasons for such an improvement may be that the new aircraft is less heavy, less costly, consumes less fuel, has an improved center of gravity position (which may help to save fuel), provides more passenger seats or storage space as compared to the prior aircraft, provides more comfort or a more efficient galley, etc.

The system uses ontologies the generation of the aircraft for design and configuration. The ontologies may be defined by description logic. The ontologies, and as a consequence also the description logic, define the types, properties and interrelationships of the components of the aircraft.

The term "topology" refers to a certain location where the corresponding component is to be installed in the aircraft.

According to an exemplary embodiment of the invention, the design data comprises information about a specific design of the component of the aircraft, such as shape or material of the component.

According to another exemplary embodiment of the present invention, the configuration data comprises information about a type of the component of the aircraft or about a position, at which the component is to be installed in the aircraft.

It should be noted that a component may also be a "void space", where no interior equipment is to be installed. Such a void space may be used as working galley space, for example.

According to another exemplary embodiment of the present invention, the set of rules comprises description logics for each component to be installed in the aircraft. In other words, each component may be related to a specific set of logical statements and rules, which defines the interrelation of the component to other components of the aircraft, and possible positions of installation thereof in the aircraft. These possible positions of installation may be related to a specific set of logical statements and rules, which defines the interrelation of the positions of installation to the whole cabin, to a door zone or a further dedicated subzone in the aircraft, for example.

According to another exemplary embodiment of the present invention, the database also comprises rules for components which are not available for installation in the aircraft, wherein the processing unit is adapted for selecting the specific set of rules for the components which are available for installation in the aircraft in the database. All other rules are not selected.

This selection may save computational costs during generation of the aircraft design and configuration.

According to another exemplary embodiment of the present invention, the processing unit is further configured for varying an electrical or mechanical connection of the component to another component to be installed in the aircraft. The component is, for example, selected from the group consisting of passenger seats, flight attendant seats, electric wiring, aircraft door types and locations, chilled and unchilled trolleys, galley modules, galley equipment, toilet modules, crew rest compartments, void space, comfort space, working area, lighting elements, stowages, electrical equipment, cable connections, cable routing, cable installation, mechanical system connections, routing and installation.

According to another exemplary embodiment of the present invention, the set of rules comprises a sub-set of deterministic rules, which do not allow varying a position information of a component and do also not allow an automated replacement of a component by another component. Further, the set of rules comprises a second sub-set of non-deterministic rules, which do allow a variation of the position information of a component and also an automated replacement of the component by another component.

Thus, only the non-deterministic rules allow variations by the processor. The deterministic rules do not allow for such variations. Both groups of rules have to be observed at all times, at least according to this exemplary embodiment.

The system may be adapted for allowing a customer to select both deterministic and non-deterministic rules, which are to be observed during aircraft design and configuration. The system may also be capable of allowing a customer to change a non-deterministic rule into a deterministic rule. There may also be deterministic rules, which the customer is allowed to disregard, in which case the system does not observe them at all. However, there are also deterministic rules, which have to be observed at all times and cannot be disregarded, even the customer would like to do so.

According to an exemplary embodiment of the present invention, at least some of the rules of the set of rules describe ontologies of the components and are based on description logic.

The processing unit may further be adapted for performing a pre-calculation of the aircraft design and configuration, which defines the position, the beginning and the end of different seating classes in the aircraft before generating the aircraft design and configuration in accordance with the set of rules.

According to another exemplary embodiment of the present invention, the processing unit is further adapted for prioritizing the rules to be observed, wherein a rule which is of low priority is disregarded, if observing one or more of the low priority rules would result in an aircraft configuration which contravenes a higher priority rule. For doing so, the processing unit may observe key performance indicators, such as overall cost, fuel consumption, weight, comfort space, service operations, installation time and purchase conditions, and the system may be adapted to decide which rules need a higher prioritization than other rules. It should be noted that the priority of a specific rule may change if a component of the aircraft is replaced by another component, or if design data or configuration data is changed.

According to another exemplary embodiment of the present invention, the processing unit is further configured for determining and prioritizing key performance indicators, and for automatically varying the customer specific design data and/or configuration data, such that a key performance indicator which is of high priority is upgraded (or improved), even if, at the same time, a low priority key performance indicator is downgraded (or worsened). For example, the user may indicate that the key performance indicator "fuel consumption" is of highest priority. The system then automatically varies the customer specific design data and/or configuration data in order to improve the design and configuration of the aircraft such that the fuel consumption is reduced, even if another key performance indicator gets worse. It is thus possible to rank the key performance indicators according to their importance and to vary the design and configuration of the aircraft such that the most important key performance parameters are improved.

According to another exemplary embodiment of the present invention, the processing unit is adapted for performing an error check of the design and configuration of the aircraft, and for automatically varying the customer-specific design data and/or configuration data in order to correct the error. Identified errors may be stored in an error storage space and may then be used for further error analysis, which may result in a change of one or more rules.

According to another exemplary embodiment of the present invention, the system comprises a data base for storing information about errors detected by the error check, wherein the processing unit is further configured for analyzing the information and for varying the customer specific design data and/or configuration data and/or a rule of the set of rules within a predefined range.

For example, if the error check reveals that no direct view from a flight attendant seat to the passenger seats is possible, one or more voluminous monuments behind door number two may be replaced by one or more partitions, which may comprise a window cut out. Alternatively, an additional cabin attendant seat may be provided in the configuration of the aircraft by the system.

According to another aspect of the invention, an aircraft assembly system is provided, which comprises the above and below described topology and ontology generation system.

Another aspect of the invention relates to a method for designing and configuring (and, according to an exemplary embodiment, also assembling) an aircraft, in which customer-specific design data and/or configuration data, which relate to a component of the aircraft are input by a user. After that, the design and the configuration of the aircraft is generated, i.e. calculated in an automated manner in accordance with a set of rules for components, which are available for installation in the aircraft, and in accordance with the customer-specific design data and/or configuration data. Then, the customer-specific design data and/or configuration data is varied (changed) in order to change, and possibly improve, the design and/or the configuration of the aircraft.

Another aspect of the invention relates to a program element which, when being executed by a processor of a topology and ontology generation system for designing and configuring an aircraft, instructs the processor to carry out the above and below described method steps.

According to another aspect of the invention, a computer-readable medium is provided, which comprises the above program element.

A computer-readable medium may be a floppy disk, a hard disk, a CD, a DVD, an USB (Universal Serial Bus) storage device, a RAM (Random Access Memory), a ROM (Read Only Memory) and an EPROM (Erasable Programmable Read Only Memory). A computer-readable medium may also be a data communication network, for example the Internet, which allows downloading a program code.

These and other aspects of the present invention will become apparent from and elucidated with reference to the embodiments described hereinafter.

Exemplary embodiments of the present invention will now be described in the following, with reference to the following drawings.

### Brief description of the drawings

Fig. 1 shows a topology and ontology generation system according to an exemplary embodiment of the present invention.
Fig. 2 shows an aircraft produced by a method according to an exemplary embodiment of the present invention.
Fig. 3 shows a layout generation, i.e., a design and configuration generation according to an exemplary embodiment of the present invention.
Fig. 4 shows a component optimization which may be implemented into the system and which also uses rules from the set of rules.
Fig. 5 shows a plurality of ontologies according to an exemplary embodiment of the present invention.
Fig. 6 shows a solution space according to an exemplary embodiment of the present invention.
Fig. 7 shows an aircraft assembly system according to an exemplary embodiment of the present invention.
Fig. 8 shows a flowchart according to an exemplary embodiment of the present invention.

### Detailed description of embodiments

The illustration in the drawings is schematically. In different drawings, similar or identical elements are provided with the same reference numerals.

Following detailed description is merely exemplary in nature and is not intended to limit application and uses. Furthermore, there is no intention to be bound by any theory presented in the preceding background or summary or the following detailed description.

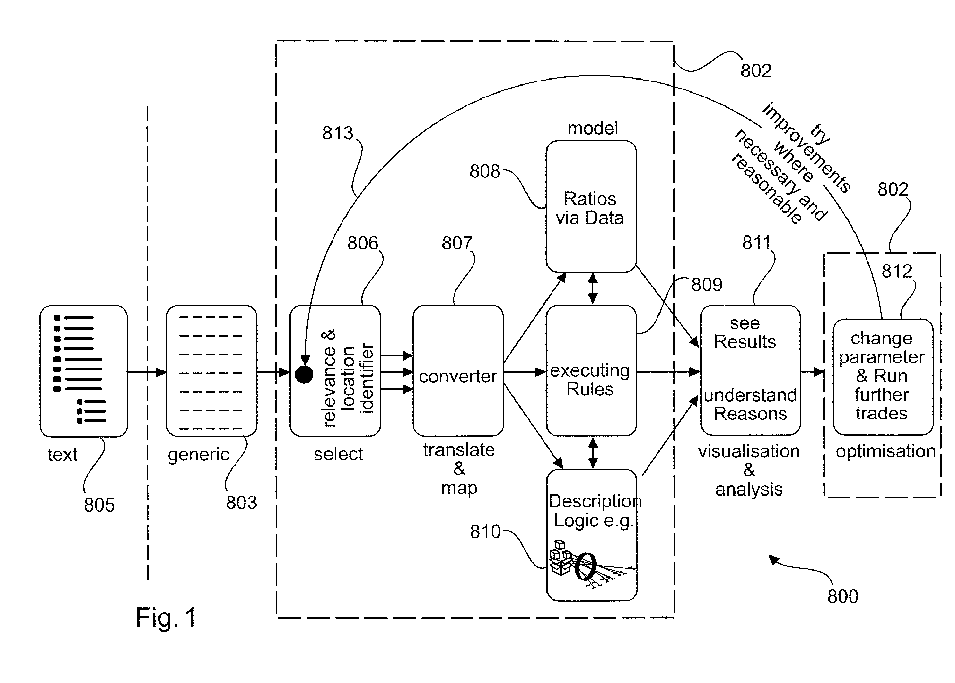

Fig. 1 shows a topology and ontology generation system 800 according to an exemplary embodiment of the present invention. The system is adapted for designing and configuring an aircraft and comprises, inter alia, a database 803, in which a set of generic rules is stored, which is related to components available for installation in the aircraft. This generic set of rules 803 corresponds to requirements 805 which relate to the components which are to be installed in an aircraft, and other properties which relate to the aircraft, e.g., fabrication costs, fuel consumption of the aircraft, etc.

A user, for example a customer, may select customer-specific design data and/or configuration data, which relate to one or more components which are to be installed in the aircraft. Also, the aircraft type and/or other design and configuration data may be selected by the user, after which the system 800 selects from the pool 803 of generic rules those rules which are relevant for the particular aircraft. Also corresponding location identifiers are selected in module 806.

The converter module 807 translates selected, generic rules into software code, i.e., program elements, and also determines, which translated rule is be used in which software module (model), i.e., a mapping is performed.

The translated rules are then mapped to the corresponding modules 808, 809, 810. In module 808, certain ratios of components and corresponding sizes are considered. In module 809, so-called executing rules are considered. The executing rules may be hardcoded rules, i.e., rules which may not be varied by the system. Module 810 comprises description logic which describes the ontologies.

All three modules interact with each other in order to calculate a final result of the aircraft design and configuration. Modules 806 to 810 and 812 (see below) are part of the processing unit 802.

The final result can be visualized and analyzed on a display 811, after which errors of the design or the configuration may be identified and input parameters, i.e., customer-specific design data and/or configuration data, may be changed in module 812, after which the relevance and location identifier module 806 (see arrow 813) may use the changed parameters for selecting new rules out of the generic pool 803, and/or for changing one or more rules, which are then set into the converter module 807, after which a new aircraft design and configuration is calculated.

The system 800 provides an automated, knowledge based engineering tool which uses one common database, together with related rules and related ontologies, such as, for example, configurations and combinations as well as optimizations using description logic.

The system provides for a fully automated aircraft design and configuration. The optimization module 812 may be capable of identifying errors and week points in the aircraft design and configuration and varies customer-specific design data and/or configuration data in order to reach a better result. This may be performed in an automated manner without user activity and even without asking for user permission.

The processing unit 802 may in particular be adapted for observing and controlling the following tasks in an interactive manner:

Checking of door distances; implementation of additional frames, for example three frames, and increasing the length of the aircraft fuselage; handling of increased cabin space by placing additional seats; checking, if a direct view of cabin attendants into the passenger cabin exists to provide for passengers visibility; checking new door rating (passengers in evacuation regarding allowed door capacity) and controlling of door types; calculation of necessary trolley and lavatory needs according to given ratios; controlling of interface points for new lavatory and/or galley's trolley; controlling system interface availability; estimating new weight regarding the center of gravity and cargo loading scenarios; controlling structure changes and reinforcements regarding the modifications; searching for best fitting load path and material use; designing of three-dimensional geometries.

An example of a parameter change (or, according to the wording of claim, a variation of customer-specific design data or configuration data) is the implementation of additional frames into the aircraft fuselage and/or the increase of the length of the aircraft fuselage. This may be performed automatically by the system without asking the user for permission. As a result, a different aircraft design and geometry may be calculated which differs from what the user originally requested (by inputting this customer-specific design data and/or configuration data). However, this new design/configuration may have certain advantages over the former design/configuration and therefore be preferred by the user.

Thus, the system is capable of translating the requirements, which relate to aircraft design and configuration into generic rules 803. From the set of generic rules the relevant rules are selected and assigned to one or more models 808, 809, 810.

Hardcoded rules, softcoded rules and generic ontologies are mixed by models 808, 809, 810 to generate a particular or fully aircraft design and configuration. The aircraft design and configuration may then be automatically improved by varying certain parameters, in particular customer-specific design data and/or configuration data, which has been input by the user.

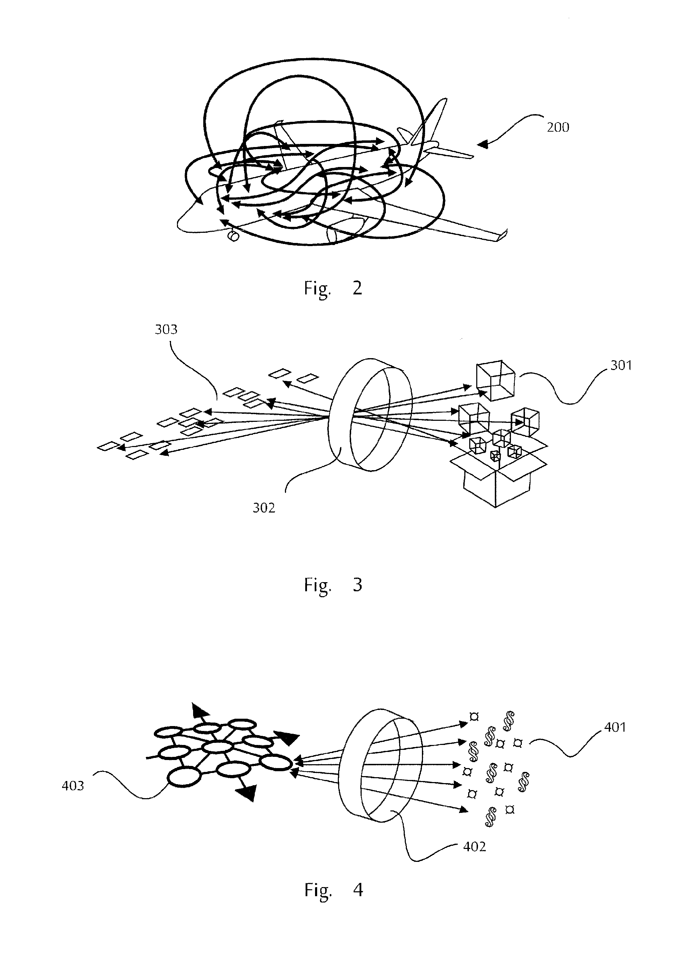

Fig. 2 shows an aircraft 200, which has been designed and configured in accordance with the above-described method. The method defines all necessary parts of the aircraft, links between the parts, and locations of the parts in the aircraft, thereby considering performance, such as weight, time and cost, with a formalized structure handling all classes and rule connections generically.

Figs. 3 and 4 show two types of ontologies, which can be used for a full generic model generation. Fig. 3 shows a layout generation, i.e., installation/positioning of items/components within locations 303 and related rules 301 and rule control 302, for example by implementing description logics.

Fig. 4 shows a component optimization 403, comprising a load path definition via structure nodes and related rules 401 and rule control 402, for example by implementing description logics.

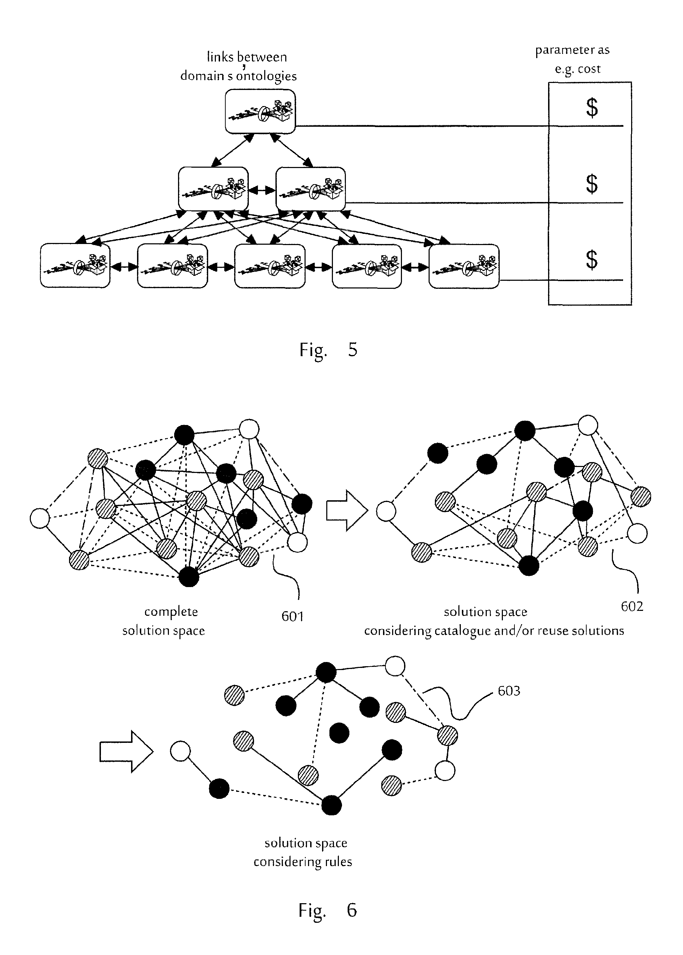

Fig. 5 shows possible links between domain ontologies. If several ontologies are taken into account, there may be the possibility to have an overall or detailed report of performance indicators, for example cost.

The system may provide for an efficient reduction of possible combinations of components, in particular by observing class split constraints, ratios, dependencies, catalogues and rules. This is visualized in Fig. 6.

At the beginning, the solution space 601 comprises a large number of combinations of monuments/components for generating a layout. However, the consideration of a catalogue and/or reused solution in the model reduces the number of combinations, as visualized by the (reduced) solution space 602. The solution space can further be reduced (see reference numeral 603), if additional requirements are taken into account by considering the rules of the set of rules stored in the database.

The system may be designed to find and select the rules to be observed out of a huge solution set and identify feasible layout configuration relationships in accordance with the rules, such as airline requirements. Further, the system may consider the most important performance indicators, such as cost, weight, center of gravity, galley service, fuel consumption. All this may be performed by using description logic.

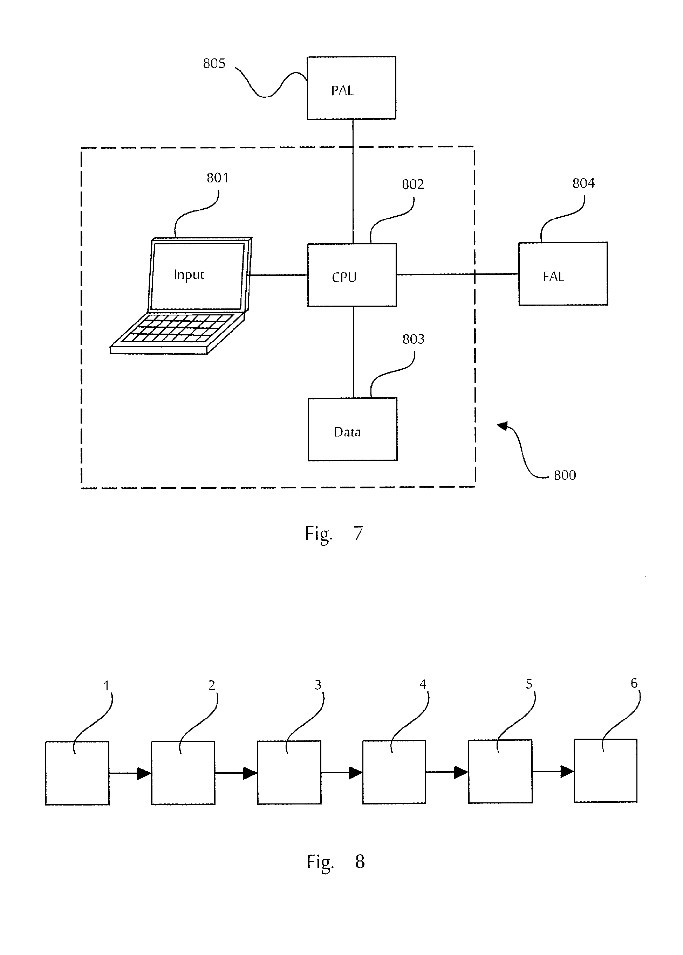

Fig. 7 shows an aircraft assembly system, which comprises the above described topology and ontology generation system 800. The processing unit 802 is connected to a final assembly line 804, at which the final aircraft assembly takes place. It may also be connected to one or more preassembly lines 805 where the pre-assembly of aircraft components takes place.

Fig. 8 shows a flow-chart of a method according to an exemplary embodiment of the present invention. In step 1, customer-specific design data and/or configuration data relating to a component of the aircraft are input into an aircraft assembly system, more specifically into a topology and ontology generation system of an aircraft assembly system. In step 2, relevant rules are selected from a generic rule database. These rules are converted and mapped to corresponding models, such that each model knows which rules are to be observed. In step 4, the calculated design and configuration is analyzed and in step 5, one or more of the customer-specific design data or configuration data is automatically changed by the system, resulting in a different aircraft design and configuration in step 6.

It should be noted that the term "comprising" does not rule out a plurality. It should further be noted that features described with reference to one of the above exemplary embodiments can also be used in combination with other features of other exemplary embodiments described above. Moreover, while at least one exemplary embodiment has been presented in the foregoing summary and detailed description, it should be appreciated that a vast number of variations exist. It should also be appreciated that the exemplary embodiment or exemplary embodiments are only examples, and are not intended to limit the scope, applicability, or configuration in any way. Rather, the foregoing summary and detailed description will provide those skilled in the art with a convenient road map for implementing an exemplary embodiment, it being understood that various changes may be made in the functional arrangement of elements described in an exemplary embodiment without departing from the scope as set forth in the appended claims and their legal equivalence.

## Claims

1. A topology and ontology generation system (800) for designing and configuring an aircraft (200), the system comprising:
an input module (801) for inputting customer specific design data or configuration data relating to a component of the aircraft;
a data base (803) comprising a set of rules for components available for installation in the aircraft;
a processing unit (802) for generating a design and configuration of the aircraft in accordance with the set of rules and the customer specific design or configuration data;
wherein the processing unit is further adapted for automatically varying the customer specific design data and/or configuration data in order to change the design and/or the configuration of the aircraft.

2. The system of claim 1,
wherein the design data comprises information about a specific design of the component of the aircraft (200).

3. The system of one of the preceding claims,
wherein the configuration data comprises information about a type of the component of the aircraft (200) or about a position, at which the component is to be installed in the aircraft.

4. The system of one of the preceding claims,
wherein the data base (803) also comprises rules for components which are not available for installation in the aircraft (200);
wherein the processing unit (802) is adapted for selecting the set of rules for the components available for installation in the aircraft in the data base.

5. The system of one of the preceding claims,
wherein the processing unit (802) is further configured for varying a connection of the component to another component to be installed in the aircraft (200).

6. The system of one of the preceding claims,
wherein the component is selected from the group consisting of passenger seats, flight attendant seats, electric wiring, aircraft door types and locations, chilled and unchilled trolleys, galley modules, galley equipment, void space, comfort space, working area, toilet modules, crew rest compartments, and lighting elements, stowages, electrical equipment, cable connections, cable routing, cable installation, mechanical system connections, routing and installation.

7. The system of one of the preceding claims,
wherein the set of rules comprises a sub-set of deterministic rules which do not allow varying a position information of a component and automatically replacing an interior equipment component by another component;
wherein the set of rule comprises a sub-set of non-deterministic rules which do allow varying the position information of a component and automatically replacing the component by another component.

8. The system of one of the preceding claims,
wherein the sub-set of deterministic rules is related to a first section of the aircraft (200);
wherein the sub-set of non-deterministic rules is related to a second section of the aircraft which is different from the first section.

9. The system of one of the preceding claims,
wherein the processing unit (802) is further configured for prioritizing the rules to be observed, wherein a rule which is of low priority is disregarded, if observing one or more of the low priority rules would result in an aircraft configuration which contravenes a higher priority rule.

10. The system of one of the preceding claims,
wherein the processing unit (802) is further configured for determining and prioritizing key performance indicators, and for automatically varying the customer specific design data and/or configuration data, such that a key performance indicator which is of high priority is upgraded, even if a low priority key performance indicator is downgraded.

11. The system of one of the preceding claims,
wherein the processing unit (802) is further configured for performing an error check of the design and configuration of the aircraft (200), and for automatically varying the customer specific design data and/or configuration data in order to correct the error.

12. The system of claim 11, further comprising:
a data base (803) for storing information about errors detected by the error check;
wherein the processing unit (802) is further configured for analyzing the information and for varying the customer specific design data and/or configuration data and/or a rule of the set of rules within a predefined range.

13. An aircraft assembly system, comprising a topology and ontology generation system (800) according to one of the preceding claims.

14. Method for designing and configuring an aircraft (200), the method comprising:
inputting customer specific design data or configuration data relating to a component of the aircraft;
generating a design and configuration of the aircraft in accordance with a set of rules for components, which are available for installation in the aircraft, and in accordance with the customer specific design data or configuration data;
automatically varying the customer specific design data or configuration data in order to change the design and/or the configuration of the aircraft.

15. Program element which, when being executed by a processor of topology and ontology generation system (800) for designing and configuring an aircraft (200), instructs the processor to carry out the steps of:
receiving customer specific design or configuration data relating to a component of the aircraft;
generating a design and configuration of the aircraft in accordance with the a set of rules for components, which are available for installation in the aircraft, and in accordance with the customer specific design or configuration data;
automatically varying the customer specific design data and/or configuration data in order to change the design and/or the configuration of the aircraft.

16. Computer-readable medium, comprising a program element of claim 15.
